# EUROPEAN PATENT SPECIFICATION

(11) **EP 3 886 566 B1**
(45) Date of publication and mention of the grant of the patent: **27.09.2023**
(21) Application number: 19891298.2
(22) Date of filing: 27.11.2019
(51) Int. Cl.: A01G 9/00, E04H 17/14, A01G 9/02

(54) **AUTOMATED OUTDOOR MODULAR VERTICAL PLANT CULTIVATION SYSTEM**
AUTOMATISIERTES, MODULARES VERTIKALES PFLANZENZUCHTSYSTEM FÜR DEN AUSSENBEREICH
SYSTÈME DE CULTURE DE PLANTES VERTICALE MODULAIRE EXTÉRIEUR AUTOMATISÉ

(30) Priority: 28.11.2018 US 201816202821; 28.11.2018 US 201816202858
(43) Date of publication of application: 06.10.2021
(73) Proprietor: Spiro, Daniel S., Scottsdale, Arizona 85251 (US)
(72) Inventor: Spiro, Daniel S., Scottsdale, Arizona 85251 (US)
(74) Representative: AWA Sweden AB
(86) International application number: PCT/US2019/063746
(87) International publication number: WO 2020/113097

(56) References cited:
- CN-A- 104 584 924
- KR-A- 20100 030 315
- US-A- 1 560 436
- US-A- 4 295 296
- US-A1- 2007 199 241
- US-A1- 2011 219 689
- US-A1- 2014 000 162
- US-A1- 2014 096 446
- US-A1- 2017 105 360
- US-A1- 2018 295 790

## Description

### BACKGROUND OF THE INVENTION

### Technical Field

This invention relates generally to a modular plant cultivation system, and more particularly to an automated outdoor modular vertical plant cultivation system suited to urban and suburban environments, employing seeded and planted plant vessels. Vertical plant cultivation systems are known. Reference is made for example to US 2011/0219689 A1.

### State of the Art

More than fifty percent of the world's population lives in urban environments, and this percentage continues to grow. This growth drives real estate prices higher, which in turn, reduces lot size affordability for the average income earner.

Urban and suburban single-family homes usually have front, back and side yards. Typically, the back-yard activities are more private and are associated with social, recreational and gardening activities. As real estate lot sizes diminish due to increasing cost, owners must decide which activities should have priority. In so doing, they often compromise on other activities. Furthermore, masonry CMU fence walls are commonly built in subdivision. These walls are architecturally unappealing and generate from manufactured through installation a significant carbon emission footprint. The CMU walls, concrete walls or combination of both are often used for commercial, and institution building. These walls share the same detriments as is in residential application often exacerbating the issues by the sheer size. In some applications, there is a need for sound attenuation reducing or eliminating noise travel from one side of the wall to the other. A common application for such a need is when a freeway or a noisy commercial facility is near residential neighborhoods. In such circumstances the residents typically face a tall and un-attractive wall creating a sense of imprisonment. To overcome the detriments of the conventional masonry or concrete wall, the present innovation grows on a vertical structure plant material while solving all privacy, security and sound transmittance issues.

### SUMMARY OF THE INVENTION

An embodiment, not forming part of the invention, includes an automated outdoor modular vertical plant cultivation system forming a vertical structure, the system comprising: a plurality of shelves, each shelf having a web and flanges; two posts, each post having a web and flanges, wherein: each shelf of the plurality of shelves are mounted between the two posts with incremental spacing between each adjacent shelf along a vertical length of the two posts; the web of each shelf includes a plurality of openings for retaining planter vessels; and the flanges of each shelf retains an embedded structural member that extends the span of the shelf and reduces the shelf height; and a fluid circulatory system including shelf irrigation piping extending longitudinally above the web of each shelf; and power or power and data and fluid members for the system distributed from vertical risers located in proximity to the web of the posts, wherein the flanges of the shelves have provisions to retain the fluid circulatory system. The system may further comprise illumination devices extending longitudinally below the web, wherein the flanges of the shelves have provision to retain a planter vessel illumination system.

Another embodiment, not forming art of the invention, includes a linear non-corrosive structure retaining planter vessels comprising: a) an integral depression on at least one face of it profile extending the length of the structure to retain a fluid pipe; b) an integral depression on at least one face of it profile extending the length of the structure to retain power or power and data conductors; and c) an integral depression on at least one face extending the length of the structure to retain linear partition panels.

Yet another embodiment, not forming part of the invention, includes a method of forming a vertical barrier employing modular structural members retaining a plurality of planter vessels supported by load bearing posts whereas the structural members can be placed at pre-set incremental distances along the vertical surface of the load bearing posts, and modular panels extending the length of the structure can provide semi-transparent or blocked views.

The invention, as prescribed by claim 1, employs a post retaining both the planter shelves and a demising wall/s whereas the post interior becomes a chase that retains fluid and power equipment for the shelf and wall populated devices.

The foregoing and other features and advantages of the present invention will be apparent from the following more detailed description of the particular embodiments of the invention, as illustrated in the accompanying drawings.

### BRIEF DESCRIPTION OF THE DRAWINGS

A more complete understanding of the present invention may be derived by referring to the detailed description and claims when considered in connection with the Figures, wherein like reference numbers refer to similar items throughout the Figures, and:
**Fig. 1A** shows a partial front view of an automated outdoor modular vertical plant cultivation system, according to an embodiment;
**Fig. 1B** shows a partial top view of an automated outdoor modular vertical plant cultivation system, according to an embodiment;
**Fig. 1C** shows a partial front view of an automated outdoor modular vertical plant cultivation system with plant material, according to an embodiment;
**Fig. 1D** shows a partial top view of an automated outdoor modular vertical plant cultivation system with photovoltaic panels, according to an embodiment;
**Fig. 2A** shows a partial side view of a shelf an automated outdoor modular vertical plant cultivation system, according to an embodiment;
**Fig. 2B** shows a partial top view of a shelf an automated outdoor modular vertical plant cultivation system, according to an embodiment;
**Fig. 2C** shows a partial bottom view of a shelf an automated outdoor modular vertical plant cultivation system, according to an embodiment;
**Fig. 3A** shows a transverse section view of an automated outdoor modular vertical plant cultivation system, according to an embodiment;
**Fig. 3B** shows a transverse section view of an automated outdoor modular vertical plant cultivation system with a planter vessel, according to an embodiment;
**Fig. 3C** shows the planter shelf's flange bracket in perspective view, according to an embodiment;
**Fig. 3D** shows a transverse section view of the planter shelf with the flange bracket, according to an embodiment;
**Fig. 4A** shows a partial perspective view of a post with the shelf bracket bolted onto the post web of an automated outdoor modular vertical plant cultivation system, according to an embodiment;
**Fig. 4B** shows a front elevation of a shelf bracket of an automated outdoor modular vertical plant cultivation system, according to an embodiment;
**Fig. 4C** shows a back elevation of a shelf bracket of an automated outdoor modular vertical plant cultivation system, according to an embodiment;
**Fig. 4D** show side elevations of a shelf bracket of an automated outdoor modular vertical plant cultivation system, according to an embodiment;
**Fig. 4E** shows a bottom elevation of a shelf bracket of an automated outdoor modular vertical plant cultivation system, according to an embodiment;
**Fig. 5A** shows a perspective of a planter vessel opening of a shelf of an automated outdoor modular vertical plant cultivation system, according to an embodiment;
Fig. 5B shows a transverse section taken along line 5B-5B of Fig. 5a of a planter vessel opening of a shelf of an automated outdoor modular vertical plant cultivation system, according to an embodiment;
Fig. 5C shows a longitudinal section taken along line 5C-5C of Fig. 5a of a planter vessel opening of a shelf of an automated outdoor modular vertical plant cultivation system, according to an embodiment;
**Fig. 6A** shows a partial vertical section of a double back-to-back automated outdoor modular vertical plant cultivation system showing the planter shelf's partition and acoustical wall panels, according to an embodiment;
**Fig. 6B** shows a partial vertical section of an automated outdoor modular vertical plant cultivation system showing the planter shelf's partition and acoustical wall panels, according to an embodiment;
**Fig. 6C** shows a partial vertical section of an automated outdoor modular vertical plant cultivation system backed against a sound attenuation panel, according to an embodiment;
**Fig. 6D** shows side elevation of a partition panel of an automated outdoor modular vertical plant cultivation system, according to an embodiment;
**Fig. 6E** shows front elevation of a partition panel of an automated outdoor modular vertical plant cultivation system, according to an embodiment;
**Fig. 6F** shows a perspective of a partition panel of an automated outdoor modular vertical plant cultivation system, according to an embodiment;
**Fig. 7A** shows a diagram of fluid circulation network, according to an embodiment;
**Fig. 7B** shows a diagram of data, power and power-consuming devices housed or attached to the vertical planter assembly, according to an embodiment;
**Fig. 7C** shows a consolidated diagram of a power inlet and fluid inlet, according to an embodiment;
**Fig. 8A** shows a partial view of crossbars penetrating through a planter shelf bridge with a fence, according to an embodiment;
**Fig. 8B** shows a partial elevation of a fence of an automated outdoor modular vertical plant cultivation system, according to an embodiment;
**Fig. 8C** shows a side elevation of crossbars penetrating through a planter shelf bridge with a fence, according to an embodiment.
**Fig. 8D** shows a partial transverse section of an automated outdoor modular vertical plant cultivation system top with a shelf containing roll-down tarps, according to an embodiment.
**Fig. 9A** shows a perspective of the post with shelf brackets according to an embodiment;
**Fig. 9B** shows a perspective of the chase post with shelf brackets according to an embodiment;
**Fig. 9C** shows a perspective of the chase post with shelves and wall retaining flanges according to an embodiment;
**Fig. 10A** shows a front elevation of the shelf bracket with side flanges according to an embodiment;
**Fig. 10B** shows a back elevation of the shelf bracket with side flanges according to an embodiment;
**Fig. 10C** shows a side elevation of the shelf bracket with side flanges according to an embodiment;
**Fig. 10D** shows a top elevation of the shelf bracket with side flanges according to an embodiment;
**Fig. 10E** shows a bottom elevation of the shelf bracket with side flanges according to an embodiment;
**Fig. 11** shows an enlarged horizontal section of the chase post just below the planter shelf cross bridge, according to an embodiment;
**Fig. 12A** shows an enlarged partial planter shelf interior vertical section between the chase post the planter shelf and the post bracket, according to an embodiment;
**Fig. 12B** shows an enlarged partial planter and sound attenuation wall transverse vertical section, according to an embodiment;
**Fig. 13A** shows a transverse section of the plant cultivation system employing a post, according to an embodiment;
**Fig. 13B** shows a transverse section of the plant cultivation system employing a chase post, according to an embodiment.
**Fig. 13C** shows a transverse section of the plant cultivation system employing a chase post and wall retaining flanges, according to an embodiment;
**Fig. 14A** shows a partial front view of an automated outdoor modular vertical plant cultivation system with a demising wall according to an embodiment;
**Fig. 14B** shows a partial top view of an automated outdoor modular vertical plant cultivation system plant shelf with a demising wall, according to an embodiment;
**Fig. 14C** shows a partial view of an automated outdoor modular vertical plant cultivation system, with plants and a demising wall, according to an embodiment; and
**Fig. 14D** shows a partial top view of an automated outdoor modular vertical plant cultivation system top mounted photovoltaic panels and a demising wall, according to an embodiment.

### DETAILED DESCRIPTION OF EMBODIMENTS OF THE INVENTION

An automated outdoor modular vertical plant cultivation system solves the yard space problem by transforming the property fence into a vertical garden, thus freeing both the back and side yards for other activities.

The System is a structural post and beam frame load bearing wall. Its horizontal beams retain plant material **43.** The beams described herein as the planter shelves **20** are shaped like the letter "I" and are rotated horizontally with their top end flanges shorter than their bottom end flanges. The planter shelves' web **21** is perforated with modularly spaced plant vessel openings **23** into which planter vessels **50** are placed. The planter shelf **20** can be placed anywhere along the vertical face of the post **2,** mounted to the shelf bracket **15.**

At least one inner side of the post flanges **6** above the planter shelf web **21** contains an irrigation pipe **30** extending the length of the shelf with a "T" junction **25** spaced at the same spacing as the planter vessel openings **23.** The planter vessel irrigation pipe **30** connects to the "T" junction with a pipe that extends over the planter vessel's irrigation aperture **42.** In a different embodiment employing drip irrigation, the planter irrigation pipe may be embedded inside the planter vessel **50** or connected to a port in the planter vessel. The irrigation circulatory system may contain nutrients and/or pesticide solution/s. These additives can be poured into the fluid container/mixing tank **14** mounted to the post **2** and/or placed inside the tarp housing **52** section.

At least one inner side of the planter shelf flanges **22** below the web **21** has power or power and data conductor/s **2** extending the length of the shelf with connectivity to a plurality of concealed light devices **27.** The light devices **27** are aimed at plant material **43** below. The light devices' **27** placement is associated with the placement of the planter vessels **50** of the shelf. In addition, power consuming devices can be attached to the planter shelves **20,** posts **2,** planter vessels **50,** and the surrounding area. These devices may include a pump **11,** a processor **56** with resident memory and program, communication module for both wired and wireless devices **61,** controller **57,** camera **34,** speaker **35,** microphone **62,** occupancy sensor **63,** humidity sensor **36,** temperature sensor **64,** perimeter security sensor **65,** backup storage device **10,** inverter **53,** driver **54,** power supply **69,** and power generating device **52.** In some embodiments a plurality of devices can be mounted on a tray (not shown) and the tray can be mounted to the post's wall **84.** Such tray can be assembled and secured to the post's wall **84** or other enclosure/s **74** away from the installation location, reducing assembly time and opportunity for installation error/s.

Non-powered devices may include protective tarp **37** to provide protective covering to plant material **43** against frost, partition panels **31** and crossbars **39** to turn the System into an impenetrable fence.

The planter shelves' **20** assembly may permit viewing beyond the planter, or not. Grooves **32** extending the length of the planter shelf top flanges **22** and protrusions at the bottom flanges provide mounting contact surfaces for tongue and groove modular partition panels **31.** The panels may vary in width, length and height, based on application needs. In a different embodiment, the System provides a vertical garden for two adjoining properties. In this scenario, the vertical planter assembly **1** partition panels **31** are located at the longitudinal center of the planter shelf **20** with planter vessel openings **23** on both sides.

The planter shelves **20** are bolted onto "L-shaped" shelf brackets **15** which are also bolted into the "I-beam" shaped post **2.** The brackets **15** are mounted along the post web **5,** having bores **17** pre-drilled at repeated spacing. The post **2** and planter shelves **20** assembly height is constrained only by its ability to support its own weight and to resist wind load forces. When the planter shelves **20** are fabricated of a none-metallic, the shelves' span can be extended by embedding tensile reinforcement **18** at the bottom end of the flanges **22.** That reinforcement can take the entire cross-sectional interior area of both the shelf **20** and/or the post **2.**

The post may support additional elements aside from the planter shelf. In one embodiment, the post's horizontal cross-section shows three flanges on each side of its web (not shown). One of the exteriors facing flanges and the center flange support the axial load of the planter shelf/s. The other exterior facing flange and the center flange support the lateral loads of the panelized wall.

In applications where a sound attenuation wall **77** and/or thicker wall is required, the shelf retaining post **2** can be configured to retain such walls without inducing vertical loads on the post **2.** The post then can be fabricated monolithically having flanges **6** to retain the wall panels **67** and chase walls **84** to mount the planter shelves **20** employing the planter shelf brackets **15.** Referred herein as the chase post **83,** the chase post **83** reduces the load of the planter shelves **20** by dividing the loads of the shelves between two walls each carrying the load of its corresponding side shelves. The space between the two walls can then become a chase that can retain the cultivation system power **99,** processing **96,** communication **98** and fluid **100** electro-mechanical key elements secured and protected from the elements. The chase post **83** with wall can retain planter shelves **20** on one or both sides. The width of the wall can be variable. The post **2** and the chase post **83** can be directly embedded in the ground or resting on a foundation. Directly embedded posts **2,** whether supporting planter shelves **20** only or supporting planter shelves **20** and wall panels **67,** can also be driven into the ground. In such application the bottom of the post 2 may have a tip to enable easier soil penetration (not shown).

The System's entire assembly can be fabricated from metallic or non-metallic non-corrosive material resistant to minerals and pollution. Metallic members can be anodized or galvanized. Metallic members may also be coated with non-corrosive material like a polymer with paint bonding surfaces. The assembly's key elements, the post **2** and the planter shelves **20,** can be fabricated through the process of extrusion with the ability to control the members' cross-sectional profile. Also, the fabrication of the flange walls can be altered to provide different appearances and support different plant vessels' **50** loads. The assembly surfaces can be painted and coated with UV inhibitors.

The System is also suited to public works environments such as a separation between roadways and residential neighborhoods, institution buildings such as museums and court buildings, commercial buildings such as offices and malls, multi-family apartments/condominiums, and vertical community gardens in cities' vacant lots. When the System is employed between noise generating public ways and residential neighborhoods, the assembly can employ both sound attenuation panels and planter shelves in concert.

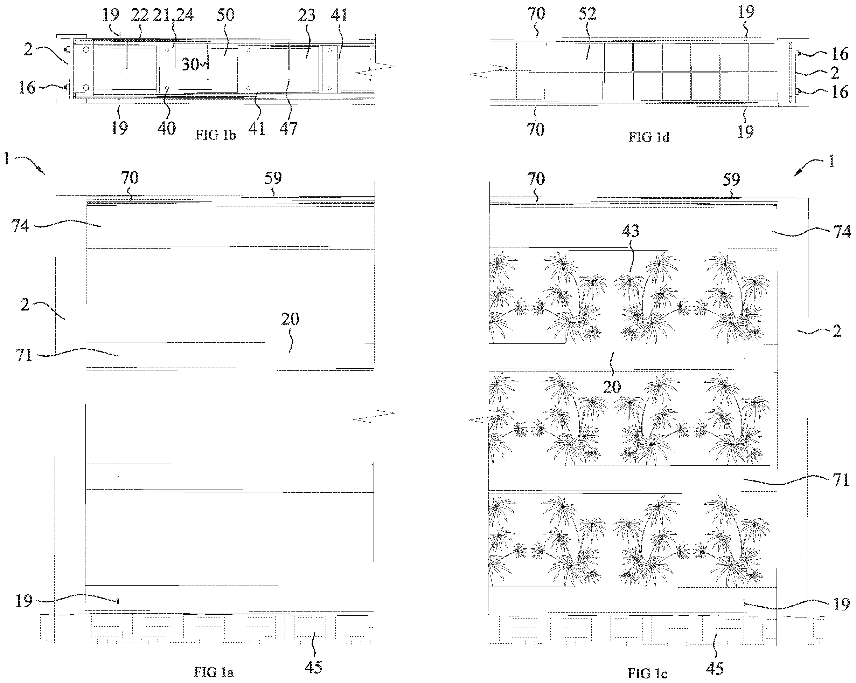

**Figs. 1a, 1b, 1c,** and **1d** show partial views of the planter shelf assembly 1.

**Fig. 1a** shows the planter shelf assembly 1 key elements. These elements include the shelf support post **2** and the planter shelf **20.** Also shown in this embodiment is a tarp housing **74** at the top of the assembly. The tarp housing **74** is used in climactic zones where plant material **43** is exposed to freezing temperatures. When temperatures drop to freezing levels, the tarp pull bar **70** is pulled down to cover the planter assembly **1** and secured to hooks 1a shown at the figure's bottom shelf. Each of the planter shelves has pre-fabricated hook bores **71** enabling the tarp placement as needed. Also, with extender bars (not shown), the tarp can be pulled horizontally, providing shade in front of the planter shelf assembly **1.**

In another embodiment, the top shelf can be an enclosure to electronic and data equipment, and/or plant material **43** fluid storage and/or mixing tanks. A top cover **59** is common to all top shelves retaining a volumetric enclosure(s).

**Fig. 1b** shows a top view of the planter shelf **20** mounted onto a post **2.** The planter shelf flanges **22** are integrally connected to the planter shelf web **21.** The web is also referred to as the bridge **24.** Planter shelf plant vessel openings **23** populate the planter shelf web **21** at a repeating pattern having the web bridge **24** provide a vessel's ledge **41** to support the planter vessel **50.** Also shown is the plant irrigation pipe **46** over the center of the plant irrigation aperture **42.**

**Fig. 1c** shows the same features as **Fig. 1a****.** It also shows plant material **43** spaced apart on three planter shelves **20.** The spacing of the planter vessels **50** can be flexible based on plant material **43** needs and architectural preference.

Fig. **1d** shows the top view of the shelf plan assembly **1** with photovoltaic panels **52** placed on top of the top cover **59.** When photovoltaic panels **52** are used, inverter **53,** power supply **69** and backup power storage device **10** can be retained inside a top shelf enclosure (not shown).

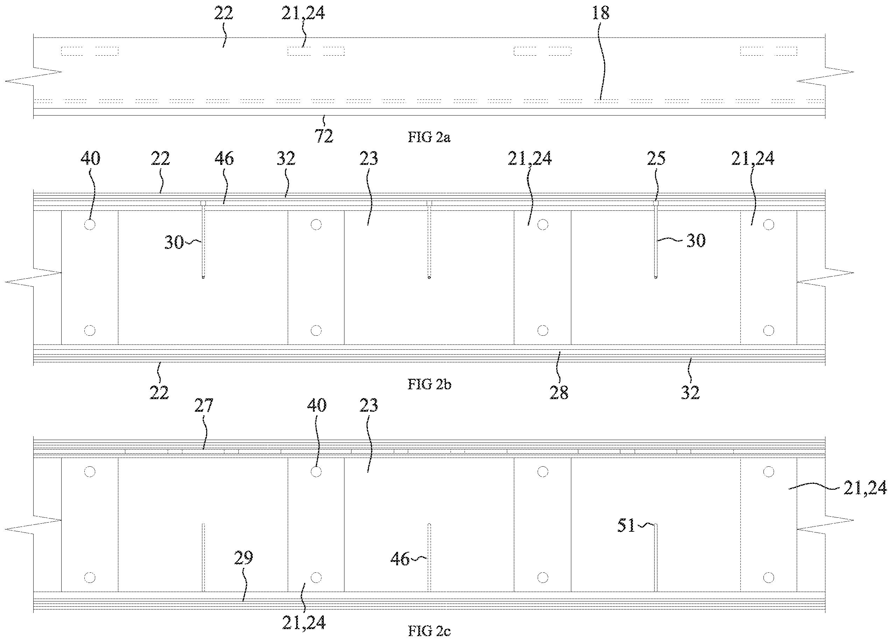

**Figs. 2a, 2b** and **2c** show partial enlarged side, top and bottom views of the planter shelf **20.**

**Fig. 2a** shows the planter shelf **20** side view. The view shows the planter shelf flange **22** jointed to its web/bridge **21/24** beyond and an optional tensile reinforcement **18** embedded inside the shelf flange **22.** Also shown at the bottom of the flange is a continuous shelf flange partition protrusion **72.**

**Fig. 2b** shows the planter shelf **20** top view. Elements shown include partition insert groove **32,** "T" junction **25,** planter vessel irrigation pipe **30,** planter irrigation pipe **46,** planter shelf flange **22,** planter shelf web/bridge **21/24,** planter shelf plant vessel opening **23** and cross bar bore **40.** The plant vessel **50** (not shown) is inserted into the plant vessel opening **23** supported by ledges at the bridge **24.** The bridge may have a means to lock the plant vessel **50** in place to eliminate plant vessel **50** theft risk (not shown).

**Fig. 2c** shows the planter shelf **20** bottom view. Elements shown include the planter shelf web/bridge **21/24,** crossbar bore **40,** plant vessel **50,** lighting device **27,** power/data mounting protrusion **29** on the inner face of the opposite flange **22.** The planter shelf plant vessel opening, and plant irrigation pipe **46** have fluid nozzle **51** over the plant irrigation aperture **42** (not shown).

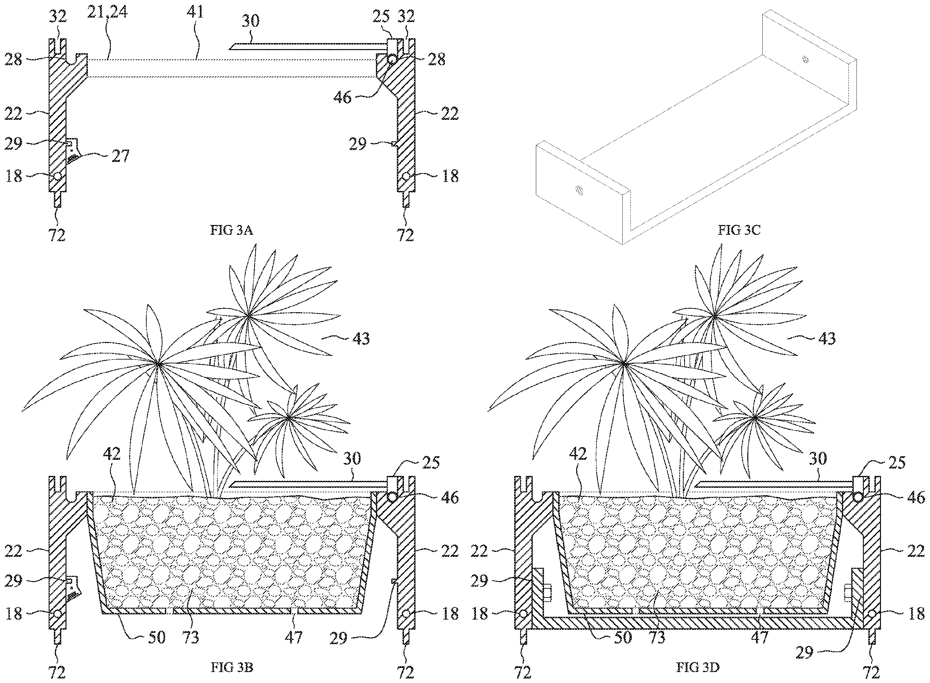

**Figs. 3a** and **3b** show transverse sections through the planter shelf **20** including its irrigation and power/data conveyance devices.

**Fig. 3a** shows the planter shelf **20** having two flanges **22** and planter shelf web bridge **21/24** joining them in proximity to the shelf s top. Along the top of the flanges **22,** partition insertion grooves extend the length of the shelf. Next to the grooves on the inner face of the flanges **22,** fluid pipe grooves **28** extend the length of the shelf. The planter irrigation pipe **46** retained inside the pipe groove **28** with a "T" junction **25** diverts fluid to the plant vessel **50** through the vessel's irrigation pipe **30.** At the flanges' **22** inner face toward the bottom, power/data protrusion **29** provides mounting surface to power- and data-consuming devices. In this embodiment a continuous lighting device extends the length of the planter shelf **20.** Also shown in this embodiment are optional tensile reinforcements **18,** and at the bottom of the flanges **22,** shelf flange partition protrusions.

**Fig. 3b** shows the same section as **Fig. 3a****,** also including a plant vessel. Additional elements shown are plant material **43,** plant vessel **50,** moisture evacuation outlet **47,** root retaining medium **73,** and plant irrigation aperture **42.**

**Fig. 3C** shows a perspective of the shelf flange bracket **7.** The bracket bridges between the planter shelf flanges **22** and the shelf flanges below the web bridge **24.** The bracket is secured to the shelf flanges **22** with bolts **19.** The bracket **7** protects the planter shelf flanges **22** from flaring out and/or caving in. The bracket **7** can be installed at factory or in the field and be placed intermittently. As with other members of the vertical cultivation system, the bracket 7 can be made of metallic or non-metallic material. In some embodiments in lieu of the bracket a bridge similar to the planter vessel bridge can be factory pre-fabricated (not shown).

**Fig. 3D** shows the same section as **3B** also employing the planter flange bracket **7.**

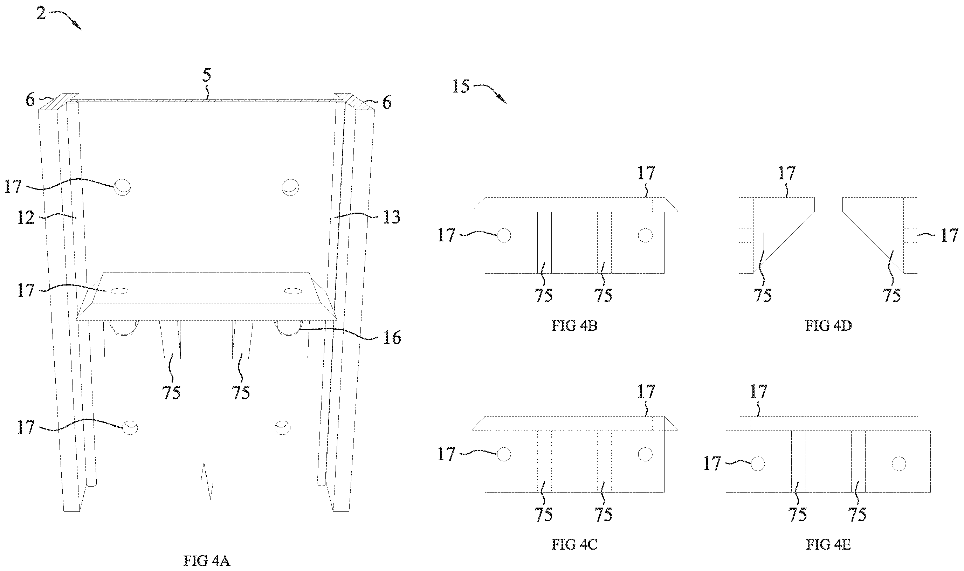

**Figs. 4a, 4b, 4c, 4d,** and **4e** show the vertical planter assembly **1** planter shelf **20** as support elements. These elements include the post **2** and the shelf bracket **15.**

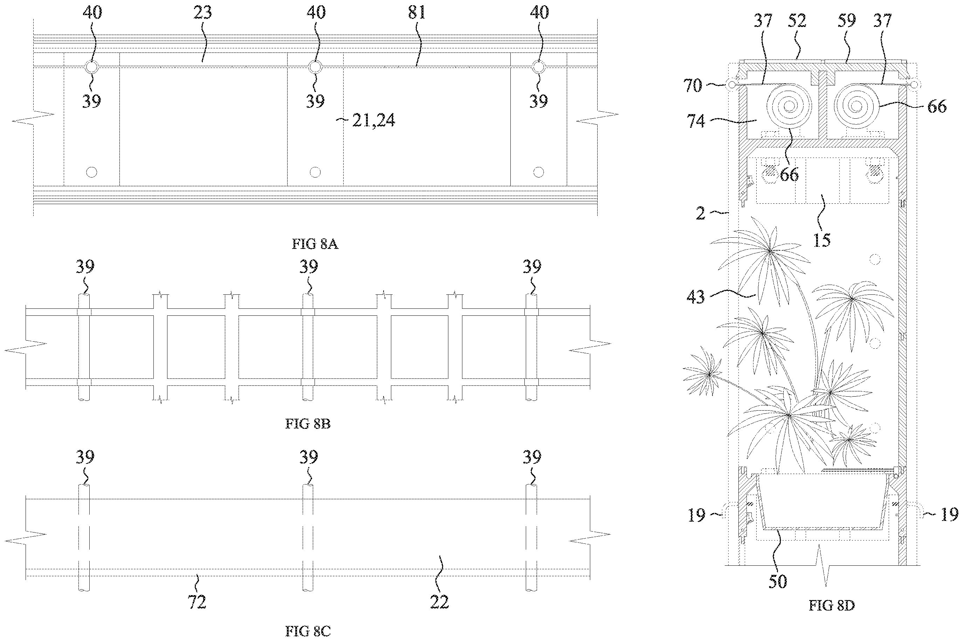

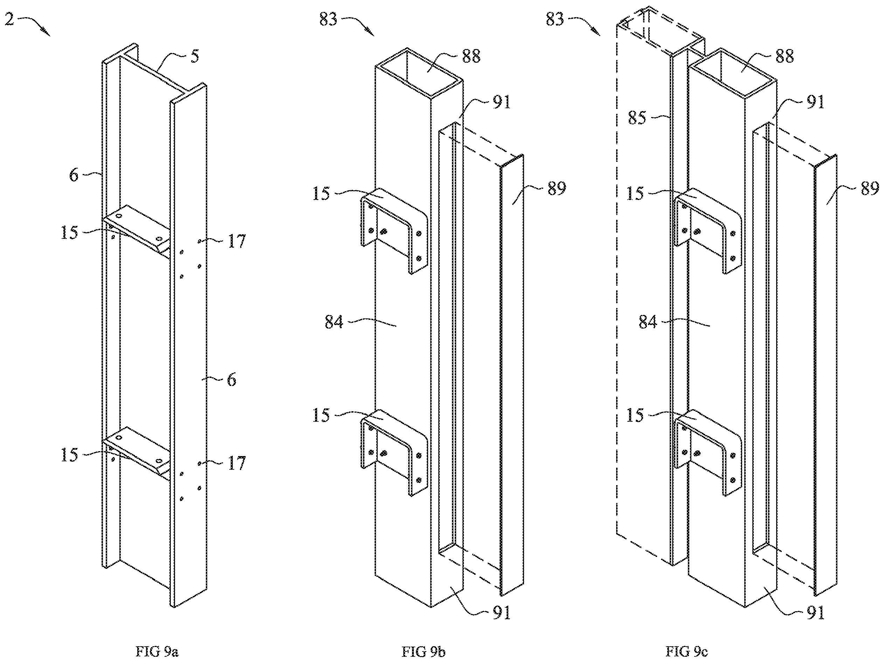

**Fig. 4a** shows a partial perspective view of the post **2** with the shelf bracket **15** bolted onto its post web **5.** In another embodiment through-bolts **16** can connect the flanges of the post **6** to the flanges of the planter shelf **22** adding support strength. **Fig. 9a** shows the post **2** with such bores pre-drilled **17.** The post web **5** and its flanges may contain optional tensile reinforcements **18** embedded in its wall. The web and the bracket can be fabricated of metallic or non-metallic non-corrosive material resistant to pollution and adapted to require paint and/or UV coating. Pre-drilled bores **17** at repeated spacing extending the length of the post webs enable mounting the shelf bracket **15** at suitable spacing between planter shelves **20.** Also shown are a fluid pipe **12** and power or power and data conduit **13** in proximity to the junction point between the post flanges **6** and the post web **5.** Irrigation equipment and power devices mounted to the post's web **5** are accessible from the planter shelf **20** side. In some embodiment the irrigation equipment can be enclosed by a cover (not shown). Other equipment can be placed inside a top shelf enclosure shown in **Fig. 8d** element **74.**

The shelf bracket **15** has two bores **17** at its top surface and an additional two bores **17** at its side wall. Bolts **16** secure the bracket **15** to the planter shelf **20** above the post web at its side wall. The post web can accept brackets 15 from both sides employing a single bolt **16** per bore **17.** To increase the bracket **15** capacity to support the planter shelf, the bracket employs two bracket ledge stiffeners **75** joining the bracket's top surface with the side wall. **Fig. 4b** shows the bracket **15** front view. **Fig. 4c** shows the bracket **15** back view. **Fig. 4d** shows the bracket **15** side views and **Fig. 4e** shows the bracket **15** bottom view. In a different configuration, the shelf bracket **15** may have side flanges **87.** These flanges **87** abut the post web flanges **6** securing the planter shelves **20** and bracket **15** to the post **2** with bolts **19.**

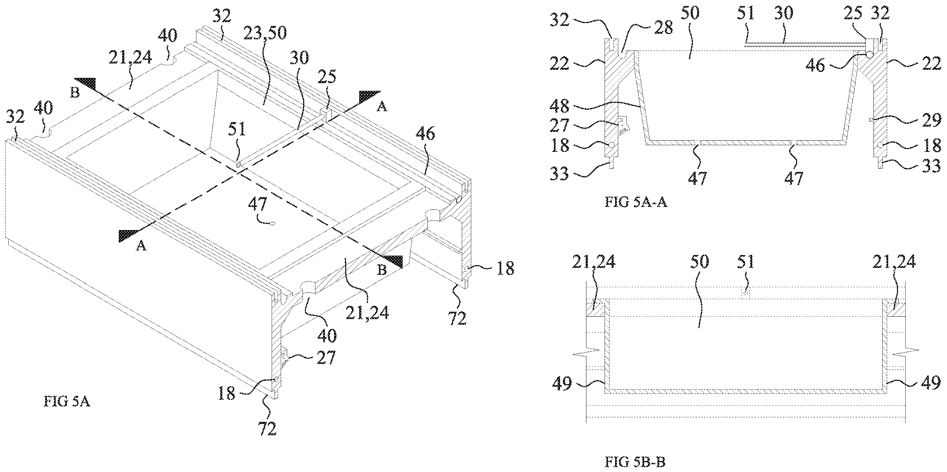

**Fig. 5a** and sections **5b-5b** and **5c-5c** show the plant vessel **50** in perspective inserted inside a section of the planter shelf **20** and in section view perpendicular to one another inside the planter shelf.

**Fig. 5a** perspective view elements include the planter vessel opening **23** enclosed by fire walls of the planter vessel **50,** the fluid irrigation system including the planter irrigation pipe **46,** the "T" junction **25,** the vessel irrigation pipe **30,** and the pipe nozzle **51.** The plant vessel hangs on the planter shelf web/bridge **21/24** having ends on its longitudinal sides parallel to the planter shelf's **20** longitudinal axis overhung projection.

Also shown are the bridge crossbar bore **40,** lighting device **27,** optional tensile reinforcement **18,** shelf flange partition protrusion **72,** and partition insert groove **32.**

Fig. 5b is a transverse section across the planter shelf **20** through the plant vessel **50.** The plant vessel **50** is tapered in at both sides of the planter shelf flanges **22** concealing the light device **27** from view while permitting it to illuminate the plant material **43** below. Also shown is the plant vessel fluid system including the planter irrigation pipe **46,** the "T" junction **25,** the vessel's irrigation pipe **30,** its fluid nozzle **51** and the fluid evacuation nozzle **51.**

Fig. 5c is a longitudinal section through the planter vessel **50** parallel with the planter shelf's longitudinal axis. This section shows the planter vessel's non-sloped walls **49** with two overhung ears resting on the planter shelf web/bridge **21/24.**

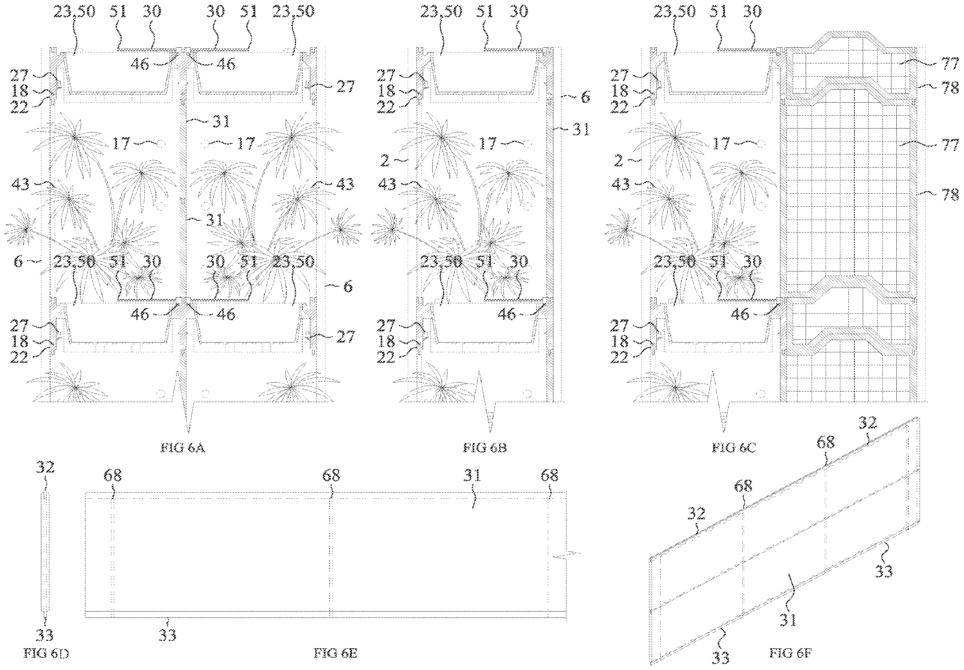

**Figs. 6a, 6b** and **6c** show different planter configuration transverse partial sections through the vertical planter assembly **1.**

**Fig. 6a** shows a double back-to-back vertical planter assembly **1** with partition panel **31** obstructing the view beyond the plant vessel **50.** This embodiment could be used as a party wall/fence in residential sub-divisions and/or in urban community gardens.

**Fig. 6b** shows a similar view with only a single shelf planter **20.**

**Fig. 6c** shows an embodiment with a single shelf planter **20** backed against a sound attenuation panel **78.** The panels **78** are modular and provide both a visual barrier and reduce/eliminate sound travel through the wall. Where sound mitigation is needed, sound cancellation devices **79** can be added to the vertical planter assembly **1** system.

The above three embodiments also show plant material **34,** the plant vessel fluid system **46/30/51** and the lighting system **27.**

**Figs. 6d, 6e** and **6f** show the tongue and grove partition panel **31** system.

**Fig. 6d** shows a side view of a typical partition panel **31.** On top of the panel, a partition panel groove **32** extends the length of the panel. At the bottom, a partition protrusion extends the length of the panel. Dashed lines shown on the panel's longitudinal axis represent partition stiffener bores **68. Fig.** **Fig. 6e** is a front view of the panel and **Fig. 6f** shows a perspective view of the partition panel **31.**

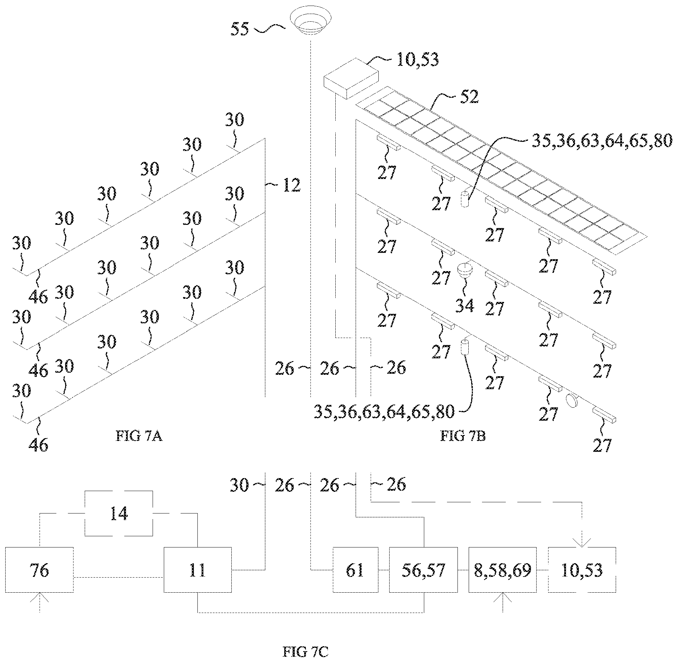

**Figs. 7a, 7b** and **7c** show the fluid, the data, the sensing, the power and the control devices for the vertical plan assembly **1.** The assembly figures are depicted employing three diagrams for clarity. In actuality, they share common elements, and may operate by the same processor **56** and controller **57.**

**Fig. 7a** shows the vertical plan assembly **1** fluid circulation network. Planter irrigation pipe **46** riser delivers fluid to the planter shelf **20.** The fluid pipe **12** is positioned vertically against the post web **5** with "T" junction **25** connectors in proximity to the mounting shelf bracket **15.** From there, the fluid travels through the planter irrigation pipe **46** on through a secondary "T" junction **25** connector to the vessel irrigation pipe **30** and into the plant vessel **50** through the pipe's fluid nozzle **51.** The irrigation piping network can be fabricated of polymer material resistant to UV subject to wide variance in temperature.

**Fig. 7b** shows data, power and power-consuming devices housed or attached to the vertical planter assembly. The devices include an antenna **55, 10/53** backup power storage device/invertor, photovoltaic panels **52,** lighting device **27,** moisture sensor **36,** occupancy sensor **63,** temperature sensor **64,** security sensor **65,** camera **34,** speaker **35,** microphone **62,** and noise cancellation device **80.**

**Fig. 7c** shows the power inlet **8** and fluid inlet **76.** The vertical assembly can operate all system devices including or excluding the irrigation system. Typically, the electrical system operates a pump **11.** Fluid entering the inlet **76** can be stored in a fluid container/mixing tank **14** or directly pumped through to plant material **34.** The pump may also divert fluid into the fluid container/mixing tank **14** and from there fluid may reach the plant material by gravity force or through the pump. The pump and the fluid container/mixing tank **14** can be located inside a shelf, against the post web **5** or in a remote location away from the vertical plant assembly **1.**

The power and data key elements of the vertical plant assembly **1** include a processor **56,** a controller **57,** a communication module **61,** power module **58** and power supply **69.** In some embodiments, the assembly **1** may also include a backup power storage device **10** and/or an inverter **53.** The entire power and communication network operate by low voltage power.

**Figs. 8a, 8b** and **8c** show the planter shelf **20** crossbars **39.** The crossbars provide a mounting structure for a security fence **81.** The crossbars' **39** bores **40,** in conjunction with the bars **39** or without, can provide a mounting location for securing the planter vessel **50** against theft.

**Fig. 8a** shows a plan view of crossbars **39** penetrating through the planter shelf bridge **24** with a fence **81** extending from bar **39** to bar **39.**

**Fig. 8b** shows in elevation view an exemplary embodiment of the fence **81** with rings. The fence **81** rings are inserted into the crossbars **39** during the vertical planter assembly **1** erection to form a continuous fence.

**Fig. 8c** shows the planter shelf **20** elevation with the crossbars **39** penetrating through.

**Fig. 8d** shows the vertical planter assembly **1** top with a shelf containing tarps **66.** The tarps protect plant material **43** against frost. The tarps are coiled around a bar with retractable capability pulling against the tarp pull bar **70.** The tarp housing **74** is divided into two chambers, whereas the dividing wall provides support for the housing's top cover **59.** Photovoltaic panels **52** can be mounted on the top cover **59** and an inverter **53** and/or back-up power/storage device **10** can be placed inside the tarp's housing **74.** Further, the housing can also be used to retain power and irrigation devices.

**Figs. 9a, 9b** and **9c** show perspective views of the plant cultivation system shelf support post.

**Fig. 9a** shows a perspective view of the post shown in **Fig. 4a****,** in partial perspective. In this configuration, the post **2** shows a web **5** and flanges **6** on both sides. Post brackets **15** are mounted to the post **2** web **5,** and bores **17** drilled into the post flanges **6** can connect the post **2** to the planter shelf flanges **22** using bolts **19.**

**Fig. 9b** shows a perspective view of the chase post **83** supporting the planter shelves **20.** In this configuration, as is in **Fig. 9a****,** the planter shelves **20** rest on and are secured to the shelves' brackets **15.** The brackets are secured to the chase post wall **84.** The brackets' flanges **87** in this configuration attach directly to the shelf flanges **22,** in the absence of post flanges **6** to attach to. The chase post **83** retains power **99,** communication **98,** sensing **97,** and processing devices **96,** as well as electromechanical fluid circulation equipment **95.** Power **99,** plant fluid **100,** or both typically enter the chase post **83** from below, connecting to its devices inside, and from there power **99** and fluid **100** is/are networked to the shelf s plant vessel/s **50** and electrical devices. The chase post enclosure **88** is secured by an access panel **89** mounted onto the chase post outward wall **91.** The panel may employ a tamper-proof lock/s **92** and support the placement of power devices mounted onto its interior and exterior surfaces.

**Fig. 9c** shows a perspective view of the chase post **83** supporting the cultivation system shelves and a panelized wall **67** system on one side of the cultivation system's longitudinal sides. In this configuration, the planter shelves **20** rest on and are secured to the shelf bracket **15** whereas the bracket is secured to the wall of the post **84.** Interlocking panels **67** placed on one another and wedged between the chase post flanges **85** form a wall. At the top of the post **83,** an anti-uplift device attached to the post secures the wall from uplift movement. The chase post **83** retains power **99,** communication **98,** sensing **97,** and processing devices **96,** as well as electromechanical fluid circulation equipment **95.** Power **99,** plant fluid **100,** or both typically enter the chase post **83** from below, connecting to its devices inside, and from there power **99** and fluid **100** is/are distributed across the network of shelves. The chase post enclosure **88** is secured by an access panel **89** mounted onto the chase post outward wall **91.** The panel may employ a tamper-proof lock/s **92** and support the placement of power devices mounted onto its interior and exterior surfaces. Also shown in this embodiment (in dash line) is an alternate double-sided planter shelf **20** with a panelized wall **67** between.

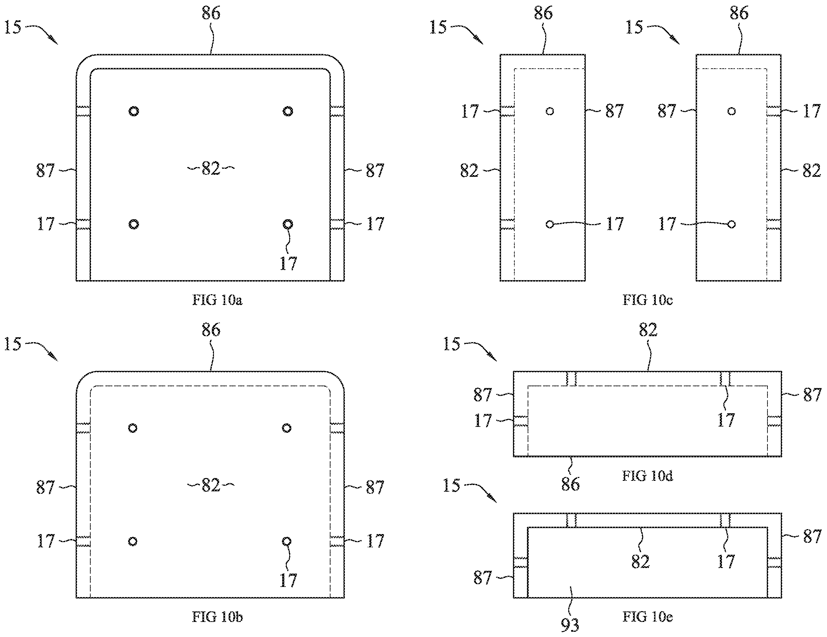

**Figs. 10a, 10b, 10e, 10d,** and **10e****,** show the planter shelf bracket elevation compatible with post configuration shown in **Figs. 9b** and **9c****.**

**Fig. 10a** shows the front elevation of the shelf bracket **15** facing the planter shelf **20.** In this embodiment the bracket **15** attaches to the chase post wall **84** by four through bolts **16** and to the planter shelf **20** with two bolts **19** at each side of the shelf bracket **15** connecting to the planter shelf flanges **22.**

**Fig. 10b** shows the back elevation of the shelf brackets **15** facing the chase post wall **84.** In this embodiment the bracket 15 attaches to the chase post wall **84** by four thorough bolts **16** and to the planter shelf **20** with two bolts **19** at each side of the bracket **15** connecting to the planter shelf flanges **22.**

**Fig. 10c** shows two side elevations of the shelf bracket **15** with two bores **17** at its flange **87** and two bores **17** at its vertical wall abutting the chase post wall **84.** On top, the bracket's shelf seat **86** supports the planter shelf **20** during installation. This support enables the installer to drill bores or drill bores **17** and thread bores **17** precisely where needed without having to support the planter shelf **20.**

**Fig. 10d** shows an elevation of the shelf bracket's **15** top with the bracket's planter shelf seat **86,** two bores **17** at the wall facing the chase post wall **84** and a single bore **17** at each flange **87** side.

**Fig. 10e** shows an elevation of the shelf brackets' **15** bottom with the bottom of the planter seat **93,** above, two bores **17** at the wall facing the chase post wall **84** and a single bore **17** at each flange side **87.**

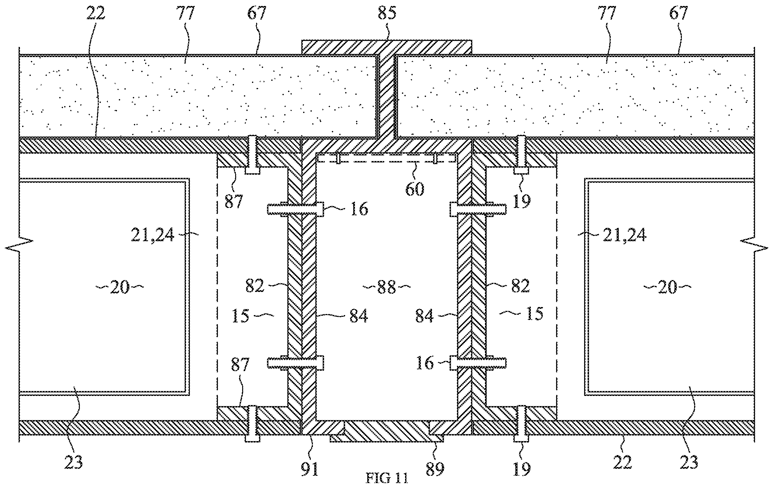

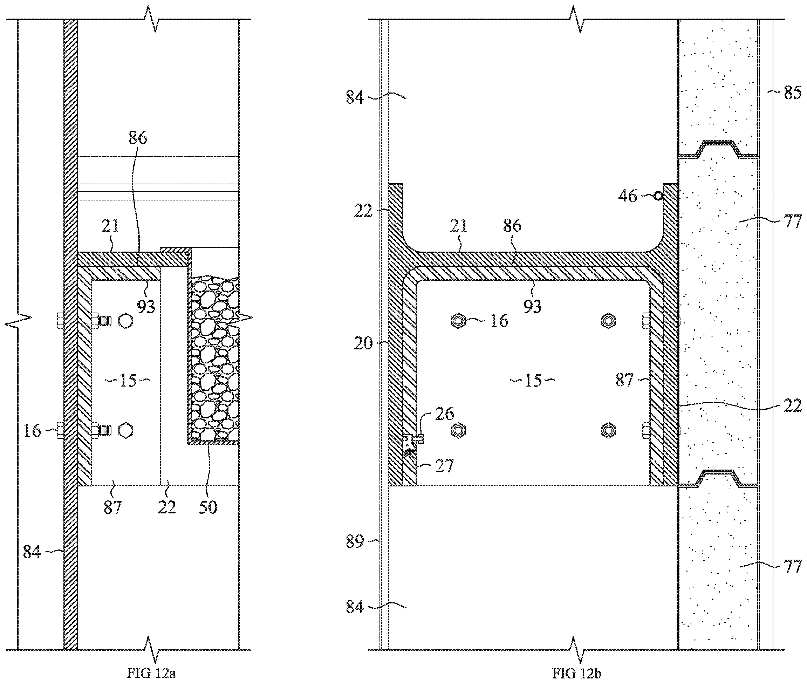

**Fig. 11** shows an enlarged horizontal section through the chase post **83** with planter shelves **20** abutting its wall **84** and attenuation wall panels **67** wedged inside its flanges **85.** The chase post enclosure **88,** walls shown supporting the load of the planter shelves with both connected by through bolts **16** to the shelves bracket **15.** The access panel **89** is shown mounted against the chase's outer face **91** enabling easy access to the chase post's enclosure **88.** Also shown are partial section designations showing shelf **20** connectivity to the chase post **83** in **Figs. 12a** and **12b****.**

**Fig. 12a** and **12b** show enlarged partial sections showing the planter shelf's **20** connectivity to the chase post wall **84.**

**Fig. 12a** shows a partial enlarged vertical section of the planter shelf **20** supported by the planter bracket **15** connected to the chase post wall **84.** This section also shows the planter shelf **20** inner side flange **85** with the paneled wall **67** behind. The section shows a pair of bolts **19** spaced apart at the inner planter wall flange **22,** a pair connecting the shelf bracket **15** to the chase post wall **84.**

**Fig. 12b** shows a partial enlarged transverse vertical section through the planter shelf **20** and the panelize wall **67** looking toward the chase post shelf supporting wall **84.** Elements shown include an outline (in dashed line) of the plant vessel **50,** a continuous light source mounted to the inner face of the plant shelf **20** outer flange **22** at its bottom, a continuous shelf irrigation pipe **46** at the top, the shelf bracket **15** with bolts **19** attaching the bracket **15** to the chase post wall **84** and to the flanges of the plant shelf **22** and wedged between the chase post flanges **85,** sound attenuating panels **77.** Inside the bottom side of the shelf flanges **22,** a pair of high tensile strength bars **18** are shown embedded. When long plant shelf span is required, and/or the plant vessels weight is heavy, the tensile bars/s **18** help reduce the cross-sectional depth of the shelf's flanges **22.**

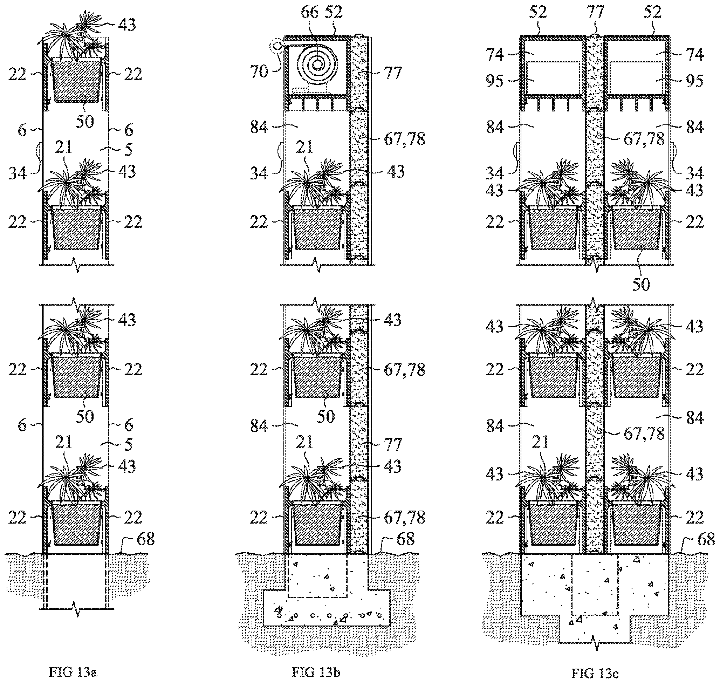

**Figs 13a, 13b,** and **13c** show transverse sections of the planter cultivation system according to the three post embodiments shown in **Fig. 9a, 9b,** and **9c****.**

**Fig. 13a****,** shows a transverse section of the planter shelf **20** employing a retaining post **2** with shelf brackets **15** as shown in **Fig. 4****.** In this embodiment, the planter web bridge **24** rests on the bracket's planter shelf seat **86** and is secured by two through bolts **19.** In an alternate embodiment, securing bolts **19** through the flanges of the planter shelf **22** and the post wall. (not shown)

**Fig. 13b** shows a transverse section of the planter shelf **20** employing a retaining chase post **83** with shelf bracket **15** shown in **Fig. 10****.** In this embodiment the planter shelf web bridge **24** rests on the bracket planter shelf seat **86** and is secured to the chase post by two bolts **19** connecting the bracket's flanges **87** to the planter shelf flanges **22** at both sides. In this embodiment the top shelf shows an enclosure containing a roll-down tarp **66.**

**Fig. 13c** shows a transverse section of the planter shelf **20** employing a retaining chase port **83** with shelf brackets **15** shown in **Fig. 10** and wall retaining flanges **85.** In this embodiment, the planter shelf **20** arrangement is the same as shown in **13b** with exception of the chase post **83** cross section. The chase post **83** includes a wall retaining flange **85.** The flange **85** may be one sided or two sided. This figure shows a one-sided configuration with a second side in dashed line. The wall shown in this embodiment is panelized **61** where the keyed panels **78** rest on one another and are wedged between the chase post flanges 85. The top shelf shows an enclosure **74** containing a power storage unit **55** and photovoltaic panel/s **52** on top.

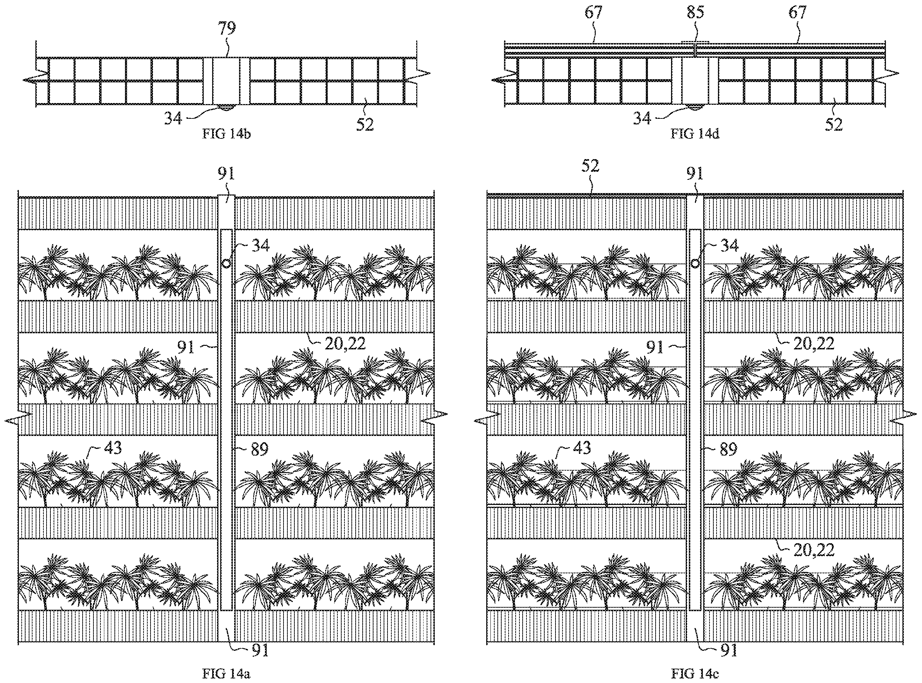

**Figs. 14a, 14b, 14c,** and **14d** show partial front and top elevations of the chase post **83** with shelves mounted on both sides and a panelized wall behind the shelves **61.**

**Fig. 14a** shows a partial front elevation of the chase wall **91** absent its access panel **89** with the planter shelves **20** supported by the planter shelves bracket **15** mounted to the chase post wall **84.** Also, shown behind the planter shelves **20** are wall panels **78.**

**Fig. 14b** shows the top view of the vertical cultivation system employing a chase post **83** absent the post's top cover. In this figure, the chase post **83** enclosure and the panelized wall **67** wedged in between the post's flanges **85.** Fluid circulation pipes **12** rising inside the chase enclosure **88** are shown flaring out through the walls of the chase to run along the inner side of the planter shelf flanges **22** with drip spouts **30** positioned over the planter vessels **50** opening.

**Fig. 14c** shows a partial front elevation of the chase post outward **91** wall with its access panel cover **89** supporting plan shelves **20** populated with plant vessels **50** and panelized wall **61** behind. Also shown in this figure is one tamper proof lock **92** for the chase access cover **89** and surveillance camera **34** at the top of the access panel **89.**

**Fig. 14d** shows the top view of the vertical cultivation system employing a chase post **83.** In this figure, photovoltaic panels **52** are shown mounted to a top shelf. The top shelf may have an enclosure **74** that retains a power storage device **58,** roll-down tarp **66,** and other devices requiring an enclosed space. Next to the photovoltaic panels **52,** the top face of the panelized walls **67** is shown with up-lift locks **94** securing the panel to the post's web and/or flanges **85.**

The embodiments and examples set forth herein were presented in order to best explain the present invention and its practical application and to thereby enable those of ordinary skill in the art to make and use the invention. However, those of ordinary skill in the art will recognize that the foregoing description and examples have been presented for the purposes of illustration and example only. The description as set forth is not intended to be exhaustive or to limit the invention to the precise form disclosed.

## Claims

1. A modular vertical plant cultivation system comprising:
at least one planter shelf (20) coupled to two posts (2) with a shelf bracket (15), each post (2) having at least one post flange (6) and the planter shelf (20) comprising a web (21) having at least one opening (23) configured to retain a planter vessel (50),
**characterised in that** at least one post (2) includes an enclosed chase with access to the interior space through an access panel (89), and **in that**
interlocking panels (67) are placed on one another and wedged between the post flanges (6) to form a wall alongside the at least one planter shelf (20).

2. The system of claim 1, further comprising a continuous fluid pipe (12) or a continuous pipe and lighting source mounted onto the planter shelf (20).

3. The system of claim 1, further comprising a high tensile strength reinforcement member (18) embedded inside or on a flange (22) of the planter shelf (20).

4. The system of claim 1, wherein the planter shelf bracket mounting height is adjustable.

5. The system of claim 1, wherein the plant cultivation system assembly in part or in whole is made of non-metallic material.

6. The system of claim 1, further comprising at least one of a: photovoltaic panel (52) and an IoT device.

7. The system of claim 1, wherein at least one post (83) with a chase retains back to back shelves (20) with or without a partition wall in between.

8. The system of claim 1, further comprising an enclosure (74) at a top of the planter shelf to retain a shading device or store power generated by a photovoltaic panel (52).

9. The system of claim 1, wherein the post fluid or fluid and power devices are enclosed in the chase with the operable access panel (89).

10. The system of claim 1, further comprising at least one of: an electric device, a mechanical device, and an irrigation device, or combinations thereof mounted to a tray, wherein the tray is assembled and mounted inside the chase.

11. The system of claim 1, wherein at least one inner side of a planter shelf flange (22) below the planter shelf web (21) has power or power and data conductor(s) (2) extending the length of the shelf with connectivity to a plurality of concealed light devices (27).

12. The system of claim 1, wherein an inner face toward the bottom of a planter shelf flange (22) comprises a power/data protrusion (29) providing a mounting surface to power- and data consuming devices.

## Patentansprüche

1. Modulares vertikales Pflanzenzuchtsystem umfassend:
mindestens ein Pflanzbehälterregal (20), verbunden mit zwei Pfosten (2), mit einer Regalhalterung (15), wobei jeder Pfosten (2) mindestens einen Pfostenflansch (6) aufweist und wobei das Pflanzbehälterregal (20) einen Steg (21) mit mindestens einer Öffnung (23) umfasst, die konfiguriert ist, um ein Pflanzbehältergefäß (50) aufzunehmen,
**dadurch gekennzeichnet, dass**
mindestens ein Pfosten (2) einen umschlossenen Leitungskanal mit Zugang zu dem Innenraum durch eine Zugangsplatte (89) aufweist, und
**dadurch gekennzeichnet, dass**
ineinandergreifende Platten (67) aufeinander angeordnet und zwischen den Pfostenflanschen (6) verkeilt sind, um entlang des mindestens einen Pflanzbehälterregals (20) eine Wand zu bilden.

2. System nach Anspruch 1, ferner umfassend ein durchgehendes Fluidrohr (12) oder ein durchgehendes Rohr und eine Beleuchtungsquelle, befestigt auf dem Pflanzbehälterregal (20).

3. System nach Anspruch 1, ferner umfassend ein hoch zugfestes Verstärkungselement (18), das in oder auf einem Flansch (22) des Pflanzbehälterregals (20) eingebettet ist.

4. System nach Anspruch 1, wobei die Höhe der Anbringung der Halterung des Pflanzbehälterregals anpassbar ist.

5. System nach Anspruch 1, wobei die Pflanzenzuchtsystemanordnung teilweise oder ganz aus nichtmetallischem Material besteht.

6. System nach Anspruch 1, ferner umfassend mindestens eines von: einer Photovoltaikplatte (52) und einer IdD-Vorrichtung.

7. System nach Anspruch 1, wobei mindestens ein Pfosten (83) mit einem Leitungskanal Rücken an Rücken Regale (20) aufnimmt, mit oder ohne eine Trennwand dazwischen.

8. System nach Anspruch 1, ferner umfassend ein Gehäuse (74) an der Oberseite des Pflanzbehälterregals zum Aufnehmen einer Schattenspendenden Vorrichtung oder zum Speichern von Strom, der von einer Photovoltaikplatte (52) erzeugt wird.

9. System nach Anspruch 1, wobei die Fluid- oder Fluid- und Stromvorrichtungen in dem Leitungskanal des Pfostens mit der bedienbaren Zugangsplatte (89) umschlossen sind.

10. System nach Anspruch 1, ferner umfassend mindestens eines von: einer elektrischen Vorrichtung, einer mechanischen Vorrichtung und einer Bewässerungsvorrichtung oder Kombinationen davon, befestigt an einem Einsatz, wobei der Einsatz in dem Leitungskanal angeordnet und befestigt ist.

11. System nach Anspruch 1, wobei mindestens eine Innenseite eines Pflanzbehälterregalflansches (22) unter dem Pflanzbehälterregalsteg (21) eine oder mehrere Strom- oder Strom- und Datenleitungen (2) aufweist, die sich über die Länge des Regals mit Verbindung zu einer Vielzahl von verdeckter Lichtvorrichtungen (27) erstrecken.

12. System nach Anspruch 1, wobei eine Innenfläche, die zur Unterseite eines Pflanzbehälterregalflansches (22) zeigt, einen Strom-/Datenvorsprung (29) umfasst, welcher eine Fläche zum Anbringen von Strom und Daten verbrauchenden Vorrichtungen bereitstellt.

## Revendications

1. Système modulaire de culture verticale de plantes comprenant :
au moins une étagère de plantation (20) couplée à deux poteaux (2) avec un support d'étagère (15), chaque poteau (2) ayant au moins une bride de poteau (6) et l'étagère de plantation (20) comprenant une âme (21) ayant au moins une ouverture (23) configurée pour retenir un récipient de plantation (50),
**caractérisé en ce qu'**au moins un poteau (2) comporte un chenal fermé avec accès à l'espace intérieur à travers un panneau d'accès (89), et **en ce que** des panneaux emboîtables (67) sont placés les uns sur les autres et coincés entre les brides de poteau (6) pour former une paroi le long de l'au moins une étagère de plantation (20).

2. Système selon la revendication 1, comprenant en outre une conduite de fluide continue (12) ou une conduite continue et une source d'éclairage montées sur l'étagère de plantation (20).

3. Système selon la revendication 1, comprenant en outre un élément de renforcement à haute résistance à la traction (18) encastré à l'intérieur ou sur une bride (22) de l'étagère de plantation (20).

4. Système selon la revendication 1, dans lequel la hauteur de montage du support de l'étagère de plantation est réglable.

5. Système selon la revendication 1, dans lequel l'ensemble du système de culture des plantes est, en partie ou en totalité, constitué d'un matériau non métallique.

6. Système selon la revendication 1, comprenant en outre au moins l'un des éléments suivants : un panneau photovoltaïque (52) et un dispositif loT.

7. Système selon la revendication 1, dans lequel au moins un poteau (83) avec un chenillard retient des étagères (20) dos à dos avec ou sans cloison de séparation entre les deux.

8. Système selon la revendication 1, comprenant en outre une enceinte (74) située en haut de l'étagère de plantation pour retenir un dispositif d'ombrage ou stocker l'énergie générée par un panneau photovoltaïque (52).

9. Système selon la revendication 1, dans lequel les dispositifs de post-fluide ou de fluide et d'énergie sont enfermés dans le chenillard avec le panneau d'accès (89).

10. Système selon la revendication 1, comprenant en outre au moins l'un des éléments suivants : un dispositif électrique, un dispositif mécanique et un dispositif d'irrigation, ou des combinaisons de ceux-ci, montés sur un plateau, dans lequel le plateau est assemblé et monté à l'intérieur du chenillard.

11. Système selon la revendication 1, dans lequel au moins un côté intérieur d'un rebord (22) d'une étagère de jardinière situé sous l'âme de l'étagère de jardinière (21) est équipé d'un conducteur d'alimentation ou d'un ou plusieurs conducteurs d'alimentation et de données (2) s'étendant sur la longueur de l'étagère avec une connectivité à une pluralité de dispositifs d'éclairage dissimulés (27).

12. Système selon la revendication 1, dans lequel une face intérieure vers le bas d'un rebord d'étagère de jardinière (22) comprend une saillie d'alimentation/de données (29) fournissant une surface de montage à des dispositifs consommant de l'énergie et des données.
